# EUROPÄISCHE PATENTSCHRIFT

(11) **EP 4 466 479 B1**
(45) Veröffentlichungstag und Bekanntmachung des Hinweises auf die Patenterteilung: **04.11.2026**
(21) Anmeldenummer: 23700979.0
(22) Anmeldetag: 13.01.2023
(51) Int. Cl.: F16L 37/084, F16L 37/14

(54) **FLUIDVERBINDUNG**
FLUID CONNECTION
RACCORDEMENT DE FLUIDE

(30) Priorität: 18.01.2022 DE 102022101100
(43) Veröffentlichungstag der Anmeldung: 27.11.2024
(73) Patentinhaber: Fränkische Industrial Pipes GmbH & Co. KG, 97486 Königsberg (DE)
(72) Erfinder: SCHRÖTER, Sören, 97486 Königsberg (DE); BARFUSS, Johannes, 97486 Königsberg (DE); VALENTA, Richard, 67401 Trebic (CZ)
(74) Vertreter: Weickmann & Weickmann PartmbB
(86) Internationale Anmeldenummer: PCT/EP2023/050772
(87) Internationale Veröffentlichungsnummer: WO 2023/139000

(56) Entgegenhaltungen:
- WO-A1-2020/104504
- WO-A1-2021/209212
- US-A- 6 112 855

## Beschreibung

Die vorliegende Erfindung betrifft eine Fluidkopplung, umfassend ein Aufnahmeelement, ein Sicherungselement, ein getrennt von dem Sicherungselement ausgebildetes Halteelement, und ein Einsteckelement, wobei das Einsteckelement in einen Aufnahmeraum des Aufnahmeelements entlang einer Einführachse einführbar ist, wobei das Sicherungselement dazu eingerichtet ist, zwischen einer Freigabestellung und einer Verriegelungsstellung entlang einer Verlagerungsachse verlagerbar zu sein, wobei das Sicherungselement dazu eingerichtet ist, in seiner Freigabestellung, ohne ein in den Aufnahmeraum des Aufnahmeelements eingeführtes Einsteckelement, derart mit dem Halteelement in Eingriff zu stehen, dass eine Verlagerung des Sicherungselements aus der Freigabestellung in Richtung der Verriegelungsstellung verhindert wird, wobei das Einsteckelement dazu eingerichtet ist, beim Einführen des Einsteckelements in den Aufnahmeraum des Aufnahmeelements, mit dem Halteelement derart wechselzuwirken, dass eine Verlagerung des Sicherungselements aus der Freigabestellung in die Verriegelungsstellung ermöglicht wird.

Die Anmelderin vertreibt seit vielen Jahren Fluidkopplungen, über welche eine erste Fluidleitung mit einer zweiten Fluidleitung verbunden werden kann. Dabei sind Kopplungen bekannt, bei welchen ein Einsteckelement einer ersten Fluidleitung in ein Aufnahmeelement einer zweiten Fluidleitung eingeführt werden kann. Ein händisch betätigbares Sicherungselement kann dann ein Lösen des Einsteckelements aus dem Aufnahmeelement verhindern.

Eine gattungsgemäße Fluidkopplung ist aus der US 6 112 855 A bekannt. Ferner sei auf die Dokumente WO 2020/104504 A1 und WO 2021/209212 A1 verwiesen.

Es kann aber, insbesondere in einer schwer zugänglichen Einbausituation, gewünscht sein, dass das Einsteckelement automatisch in dem Aufnahmeelement gesichert wird.

Es ist daher die Aufgabe der vorliegenden Erfindung, eine Fluidkopplung bereitzustellen, welche eine verbesserte Bedienbarkeit aufweist, insbesondere welche eine automatische Sicherung bei einer erfolgten Kopplung ermöglicht.

Diese Aufgabe wird erfindungsgemäß durch eine Fluidkopplung nach Anspruch 1 gelöst.

In anderen Worten beeinflusst ein Einführen des Einsteckelements in das Aufnahmeelement das Halteelement derart, dass eine Verlagerung des Sicherungselements in die Verriegelungsstellung ermöglicht wird, worauf hin die durch das Federelement bereitgestellte Federkraft das Sicherungselement selbsttätig, das heißt ohne zusätzliche Betätigung durch einen Benutzer, in die Verriegelungsstellung verlagert, so dass eine Sicherung des Einsteckelements in dem Aufnahmeelement stattfindet.

Die erfindungsgemäße Fluidkopplung ermöglicht es, dass das Element, welches die Federkraft zur Betätigung des Sicherungselements bereitstellt von dem Halteelement getrennt ausgebildet sein kann, welches das Sicherungselement daran hindert, sich aus der Freigabestellung in die Verriegelungsstellung zu verlagern (bzw. diese Verlagerung freigibt). Somit muss das Einsteckelement beispielsweise nur gegen die elastische Rückstellkraft des Haltelements verlagert werden, so dass ein Einführen des Einsteckelements in das Aufnahmeelement im Gegensatz dazu deutlich vereinfacht werden kann, dass mit dem Einführen des Einsteckelements in das Aufnahmeelement eine Verlagerung gegen die Federkraft des Federelements stattfinden muss, welches das Sicherungselement relativ zu dem Einsteckelement verlagert, um das Einsteckelement in dem Aufnahmeelement zu sichern. Die Federkraft des Federelements kann dementsprechend deutlich stärker ausgebildet sein, als es möglich wäre, wenn das Einführen des Einsteckelements in das Aufnahmeelement gegen die Federkraft des Federelements/Sicherungselements stattfinden würde, und somit kann das Sicherungselement deutlich höheren Auszugskräften standhalten.

Ferner kann ein Sicherungsabschnitt an dem Sicherungselement, welcher dazu eingerichtet ist, mit dem Einsteckelement in Kontakt zu treten, um dieses zu sichern, insbesondere beidseitig mit 90°-Kanten ausgebildet sein, das heißt, ohne dass an der Kante wenigstens eine Einführschräge vorgesehen werden muss, um bei Kontakt mit dem Einsteckelement eine Verlagerung des Sicherungselements hervorzurufen.

Die Verlagerungsachse des Sicherungselements kann im Wesentlichen rechtwinklig zu der Einführachse des Einsteckelements angeordnet sein.

Ferner kann das Halteelement parallel zu der Einführachse des Einsteckelements in das Aufnahmeelement mit dem Aufnahmeelement verbindbar sein.

Zur Verbindung des Einsteckelements mit dem Aufnahmeelement kann das Einsteckelement an seinem Außenumfang einen Abschnitt aufweisen, in welchem sich der Außendurchmesser des Einsteckelements ändert, wobei das Sicherungselement ferner den zuvor erwähnten Sicherungsabschnitt umfassen kann, welcher dazu eingerichtet ist, in der Verriegelungsstellung des Sicherungselements mit dem Abschnitt mit geändertem Außendurchmesser des Einsteckelements einzugreifen, um eine axiale Verlagerung des Einsteckelements zumindest in einer Richtung, vorzugsweise einer Löserichtung von Einsteckelement und Aufnahmeelement, entlang der Einführachse zu verhindern.

In der Verriegelungsstellung und/oder in der Freigabestellung des Sicherungselements kann dieses mit beispielsweise dem Aufnahmeelement oder dem Halteelement zerstörungsfrei lösbar verrastet sein. So kann beispielsweise verhindert werden, dass das Sicherungselement unbeabsichtigt aus der Verriegelungsstellung oder der Freigabestellung verlagert wird.

In anderen Worten kann die erfindungsgemäße Fluidkopplung ein Fehlverriegeln des Sicherungselements verhindern, da die Verlagerung des Sicherungselements erst dann ermöglicht ist, wenn das Einsteckelement ausreichend weit in das Aufnahmeelement eingeschoben ist, das heißt, dass ein Gegenelement am Einsteckelement, mit welchem das Sicherungselement in Formschluss treten kann, bereits an derjenigen Position angeordnet ist, an welcher das Sicherungselement in seiner Verriegelungsstellung mit dem Gegenelement in Eingriff tritt. Es kann zusätzlich vorgesehen sein, dass das Einsteckelement in dieser Position bereits mit einer Dichtungseinrichtung in Kontakt getreten ist, welche an dem Aufnahmeelement und/oder dem Halteelement angeordnet ist, um einen in dem Einsteckelement ausgebildeten Fluidkanal nach außen hin abzudichten.

Das Aufnahmeelement und/oder das Sicherungselement und/oder das Halteelement und/oder das Einsteckelement können/kann einen thermoplastischen Kunststoff, insbesondere Polyamid, umfassen. Insbesondere kann wenigstens eines dieser Elemente ein glasfaserverstärktes Polyamid, insbesondere PA66 GF30, umfassen. Das Halteelement kann insbesondere PA11 umfassen. Das Einsteckelement kann aber auch ein Metall umfassen.

Die Fluidkopplung umfasst ferner ein gesondert ausgebildetes Abstützelement, welches einen Anlageabschnitt aufweist, gegen welchen das Federelement anliegt, wobei das Abstützelement mit dem Aufnahmeelement verbindbar ist und die Federkraft des Federelements zwischen dem Abstützelement und dem Sicherungselement wirkt. So kann das Federelement beispielsweise zuerst zwischen dem Abstützelement und dem Sicherungselement, insbesondere in einer vorgespannten Weise, eingebracht werden und anschließend kann die Einheit aus Abstützelement, Sicherungselement und Federelement mit dem Aufnahmeelement verbunden werden. Natürlich ist es aber ebenfalls denkbar, dass zuerst das Sicherungselement und/oder das Abstützelement mit dem Aufnahmeelement verbunden werden/wird und anschließend das Federelement daran angeordnet wird.

Das Abstützelement kann einen thermoplastischen Kunststoff, beispielsweise Polyamid, insbesondere ein glasfaserverstärktes Polyamid, zum Beispiel PA66 GF30, umfassen.

Dabei kann, in der Verriegelungsstellung des Sicherungselements, eine, in Bezug auf eine Längsmittelachse des Aufnahmeelements betrachtet, radial äußere Seite des Anlageabschnitts des Abstützelements mit einer, ebenfalls in Bezug auf die Längsmittelachse des Aufnahmeelements betrachtet, radial äußeren Seite des Sicherungselements im Wesentlichen bündig sein. Insbesondere kann das Abstützelement in einer Seitenansicht näherungsweise Z-förmig ausgebildet sein, wobei der obere Querstrich der Z-Form durch den Anlageabschnitt des Abstützelements gebildet sein kann. An dem unteren Querstrich der Z-Form kann eine Rasteinrichtung vorgesehen sein, welche dazu eingerichtet ist, mit einer entsprechenden Gegen-Rasteinrichtung des Aufnahmeelements einzugreifen. Das heißt, in einer radialen Richtung der Fluidkopplung betrachtet, kann der Anlageabschnitt des Abstützelements weiter außen angeordnet sein als ein Verbindungsabschnitt des Abstützelements mit dem Aufnahmeelement.

In einer Weiterbildung der vorliegenden Erfindung kann das Halteelement wenigstens einen federnden Haltearm umfassen, welcher sich parallel zu der Einführrichtung des Einsteckelements in den Aufnahmeraum erstreckt, und das Einsteckelement kann dazu eingerichtet sein, beim Einführen des Einsteckelements in den Aufnahmeraum des Aufnahmeelements, den wenigstens einen federnden Haltearm des Halteelements nach radial außen zu verlagern, um so eine Verlagerung des Sicherungselements aus der Freigabestellung in die Verriegelungsstellung zu ermöglichen. Insbesondere kann das Halteelement zwei federnde Haltearme umfassen, welche in Bezug auf den Aufnahmeraum diametral gegenüberliegend angeordnet sind. Die Verlagerung der beiden Haltearme nach radial außen kann somit in einer gemeinsamen Ebene stattfinden. Diese Ebene kann vorteilhafterweise zu der Verlagerungsrichtung des Sicherungselements aus der Freigabestellung in die Verriegelungsstellung orthogonal ausgerichtet sein.

In diesem Zusammenhang kann das Sicherungselement an demjenigen Abschnitt, welcher mit dem federnden Haltearm derart in Eingriff steht, dass eine Verlagerung des Sicherungselements aus der Freigabestellung in Richtung der Verriegelungsstellung verhindert wird, wenigstens einen Vorsprung aufweisen, welcher dazu eingerichtet ist, mit dem federnden Haltearm so einzugreifen, dass eine Verlagerung des federnden Haltearms nach radial innen im Wesentlichen verhindert ist und/oder dass eine Verlagerung des Abschnitts des Sicherungselements nach radial außen im Wesentlichen verhindert ist. Das heißt, der Abschnitt des Sicherungselements, welcher in der Freigabestellung einen jeweiligen federnden Haltearm kontaktiert, kann den federnden Haltearm an einer radial inneren Seite umgreifen, um einen Formschluss gegen eine ungewünschte voranstehend beschriebene Bewegung bereitzustellen.

Ferner kann der Abschnitt des Sicherungselements, welcher mit dem federnden Haltearm derart in Eingriff steht, dass eine Verlagerung des Sicherungselements aus der Freigabestellung in Richtung der Verriegelungsstellung verhindert wird, in der Verriegelungsstellung des Sicherungselements durch eine Öffnung des Aufnahmeelements nach außen hindurchtreten, insbesondere wobei die Öffnung an dem Aufnahmeelement an einer zu dem Federelement diametral entgegengesetzten Seite angeordnet sein kann. Auf diese Weise kann von außen, beispielsweise in einer Richtung, welche zu der Einführrichtung des Einsteckelements in das Aufnahmeelement im Wesentlichen parallel ist, erkennbar sein, ob sich das Sicherungselement in der Verriegelungsstellung befindet oder nicht. Um eine derartige Erkennung zu vereinfachen, kann zumindest der Abschnitt des Sicherungselements, welcher durch die Öffnung hindurchtritt, insbesondere das gesamte Sicherungselement, in einer zu dem Aufnahmeelement verschiedenen Farbe ausgebildet sein.

Auch kann sich der Haltearm zu seinem freien Ende hin verjüngen und/oder eine in Bezug auf eine Längsmittelachse des Aufnahmeelements radial äußere Seite des Haltearms eine Stufe aufweisen, an welcher die äußere Seite, in einer Richtung zu seinem freien Ende hin betrachtet, nach radial innen zurücktritt. Somit kann ermöglicht werden, dass sich der Haltearm weiter nach radial außen verlagern kann, im Vergleich zu einem Haltearm, welcher sich, bei gleichem Freiraum in dem Aufnahmeelement, an seiner radial äußeren Seite gerade erstreckt.

Vorteilhafterweise kann das Federelement eine Schraubenfeder, insbesondere eine Druckfeder, sein, welche aus einem Metall, insbesondere Federstahl, ausgebildet ist. Insbesondere durch das Ausbilden des Federelements aus Metall kann ein Kriechen des Federelements und damit eine Abnahme der Federkraft bei längerer Standzeit des Sicherungselements in der Freigabestellung vermieden werden.

Insbesondere kann das Abstützelement dazu eingerichtet sein, derart mit dem Aufnahmeelement verrastet zu werden, dass es zerstörungsfrei unlösbar mit dem Aufnahmeelement verbunden ist. Wie bereits weiter oben beschrieben, kann so das Abstützelement eine sichere Anlage für das Federelement bereitstellen.

In vorteilhaften Ausführungsformen der vorliegenden Erfindung kann das Aufnahmeelement wenigstens eine Durchgangsöffnung aufweisen, welche sich von einer Außenseite nach radial innen und im Wesentlichen orthogonal zu sowohl der Einführrichtung des Einsteckelements in das Aufnahmeelement als auch zu der Verlagerungsrichtung des Sicherungselements erstreckt. Diese Durchgangsöffnung kann sich insbesondere im Wesentlichen in einer Richtung erstrecken, in welcher sich ein der Durchgangsöffnung benachbarter Haltearm nach radial außen verlagern kann. Beispielsweise kann jedem federnden Haltearm eine Durchgangsöffnung zugeordnet sein. Mit Bezug auf die weiter oben beschriebene gemeinsame Ebene der Verlagerung der beiden federnden Haltearme, können sich die beiden zugeordneten Durchgangsöffnungen ebenfalls in oder parallel zu dieser gemeinsamen Ebene erstrecken. Im Falle einer parallelen Erstreckung der Durchgangsöffnungen zu der gemeinsamen Ebene, können die Durchgangsöffnungen insbesondere an einer Seite der Ebene angeordnet sein, welche zu der Seite der Anordnung des Sicherungselements in der Freigabestellung entgegengesetzt ist. So können die Durchgangsöffnungen mehr Freiraum in dem Aufnahmeraum des Aufnahmeelements erzeugen und auf diese Weise einen Verlagerungsweg des Sicherungselements aus der Freigabestellung in die Verriegelungsstellung erhöhen. Dass sich die Durchgangsöffnungen seitlich durch eine Wandung des Aufnahmeelements vollständig hindurch erstrecken können, kann insbesondere in dem Fall vorteilhaft sein, in welchem das Aufnahmeelement unter Verwendung eines Spritzgussverfahrens hergestellt wird, da hier seitlich Kerne eingeführt und nach Herstellung des Aufnahmeelements herausgezogen werden können.

In einem Zustand, in welchem das Sicherungselement an dem Aufnahmeelement, insbesondere in der Verriegelungsstellung, angeordnet ist, kann ein Freiraum zwischen einem Abschnitt des Sicherungselements und dem Abstützelement angeordnet sein, welcher zum Einführen eines Werkzeugs geeignet ist, um damit das Sicherungselement aus der Verriegelungsstellung in die Freigabestellung zu verlagern. Beispielsweise kann ein Schlitz-Schraubendreher in den Freiraum eingeführt werden, um so das Sicherungselement aus der Verriegelungsstellung in die Freigabestellung hebeln zu können. Um ein Werkzeug besser in den Freiraum einführen zu können, kann das Abstützelement eine Ausnehmung aufweisen, welche in Verlängerung in den an dem Sicherungselement angeordneten Freiraum übergeht. Das Sicherungselement kann so zum Beispiel auch durch Drehen des Werkzeugs aus der Verriegelungsstellung angehoben werden.

Des Weiteren kann ein Sicherungsabschnitt des Sicherungselements, welcher in der Verriegelungsstellung des Sicherungselements mit einem Gegenelement des Einsteckelements in Eingriff steht, entlang der Einführrichtung des Einsteckelements in das Aufnahmeelement betrachtet, eine größere longitudinale Erstreckung aufweisen als eine longitudinale Erstreckung des Gegenelements. Ein Gegenelement kann hier insbesondere ein in Umfangsrichtung ringförmiger Vorsprung bzw. Bund an dem Einsteckelement sein. Alternativ kann das Gegenelement an dem Einsteckelement aber auch als Ausnehmung ausgebildet sein. Eine große longitudinale Erstreckung des Sicherungsabschnitts des Sicherungselements kann eine Stabilität des Sicherungselements im Hinblick auf Auszugkräfte des Einsteckelements aus dem Aufnahmeelement, während sich das Sicherungselement in der Verriegelungsstellung befindet, erhöhen.

Vorteilhafterweise kann das Halteelement als von dem Aufnahmeelement gesondertes Bauteil ausgebildet sein und dazu eingerichtet sein, mit dem Aufnahmeelement zu verrasten, insbesondere unter Verwendung von wenigstens zwei, bevorzugt unter Verwendung von drei, Rastpaaren. Als "Rastpaar" kann hier eine Zusammenwirkung von wenigstens einem Vorsprung und wenigstens einer Ausnehmung betrachtet werden, welche dazu eingerichtet sind, miteinander in Eingriff zu treten, wobei, im Falle von mehreren Vorsprüngen bzw. mehreren Ausnehmungen je Rastpaar, die jeweiligen Vorsprünge bzw. die jeweiligen Ausnehmungen eines Rastpaars lokal gruppiert angeordnet sein können. Die Verrastung des Halteelements mit dem Aufnahmeelement kann insbesondere zerstörungsfrei unlösbar ausgebildet sein.

Das Halteelement kann wenigstens zwei, insbesondere nicht-federnde, Vorsprünge aufweisen, welche dazu eingerichtet sind, in wenigstens zwei entsprechende Ausnehmungen des Aufnahmeelements einzugreifen, um eine Führung des Halteelements beim Einführen in das Aufnahmeelement bereitzustellen. Auf diese Weise kann eine vorbestimmte rotatorische Ausrichtung des Halteelements gegenüber dem Aufnahmeelement eindeutig definiert werden, sodass eine Fehlausrichtung des Halteelements in Bezug auf das Aufnahmeelement bei der Montage diese beiden Komponenten vermieden werden kann.

Dabei können sich die Ausnehmungen des Aufnahmeelements im Wesentlichen parallel zu der Einführrichtung des Einsteckelements in das Aufnahmeelement in das Aufnahmeelement erstrecken. Insbesondere kann eine jeweilige Ausnehmung des Aufnahmeelements, welche zur Aufnahme eines jeweiligen Vorsprungs des Halteelements eingerichtet ist, eine wesentlich längere, beispielsweise um mehr als das Fünffache, longitudinale Erstreckung aufweisen als eine longitudinale Erstreckung eines zugeordneten Vorsprungs. Eine solche Ausnehmung des Aufnahmeelements kann von einer Seite des Aufnahmeelements beginnend, an welchem das Einsteckelement in den Aufnahmeraum eingeführt wird, eine größere longitudinale Erstreckung aufweisen als die longitudinale Erstreckung der federnden Haltearme von der voranstehend erwähnten Seite des Aufnahmeelements zu dem freien Ende der Haltearme hin betrachtet, in dem an dem Aufnahmeelement montierten Zustand des Halteelements. Die Vorsprünge des Halteelements können sich in der weiter oben beschriebenen gemeinsamen Ebene der federnden Haltearme erstrecken. Auf diese Weise können die Ausnehmungen den benötigten Freiraum zur Verfügung stellen, damit die federnden Haltearme beim Einführen des Einsteckelements in den Aufnahmeraum des Aufnahmeelements nach radial außen verlagert werden können.

In einer Richtung orthogonal zu dieser gemeinsamen Ebene betrachtet, können die Vorsprünge und die federnden Haltearme des Halteelements eine im Wesentlichen gleiche Höhe aufweisen. Alternativ können die Vorsprünge mit einer größeren Höhe ausgebildet sein als die federnden Haltearme. Durch die voranstehend beschriebenen Merkmale kann eine Herstellung des Halteelements und/oder des Aufnahmeelements, insbesondere unter Verwendung eines Spritzgussverfahrens, vereinfacht werden.

Ferner kann die Fluidkopplung wenigstens ein Indikatorelement, insbesondere einen maschinenlesbaren Code, wie beispielsweise ein DMC-Codeelement, einen Barcode, einen QR-Code o.ä., umfassen. Das wenigstens eine Indikatorelement kann dabei derart angeordnet sein, dass es in einem nicht-verbundenen Zustand des Einsteckelements mit dem Aufnahmeelement zu einer Außenseite hin zumindest teilweise verdeckt angeordnet ist, sodass ein Erkennen bzw. ein maschinelles Auslesen des jeweiligen Indikatorelements verhindert ist. Im korrekt verbundenen Zustand der Fluidkopplung kann das wenigstens eine Indikatorelement derart in eine Position verlagert werden, dass es erkennbar bzw. maschinell auslesbar ist. Beispielsweise kann an zwei Seitenflächen des Sicherungselements jeweils ein Indikatorelement angeordnet sein, welches in der Freigabestellung von einem Teil des Aufnahmeelements verdeckt ist, jedoch in der Verriegelungsstellung mit einer jeweiligen Durchbrechung des Aufnahmeelements ausgerichtet angeordnet ist, sodass das Indikatorelement an dem Sicherungselement von einer Außenseite her erkannt bzw. erfasst werden kann.

Zusätzlich oder alternativ dazu kann ein Indikatorelement an einem Schwenkelement angeordnet sein, wobei das Schwenkelement dazu eingerichtet ist, aus einer ersten der Freigabestellung der Fluidkopplung zugeordneten Position in eine zweite der Verriegelungsstellung der Fluidkopplung zugeordneten Position verschwenkbar zu sein. Insbesondere kann das Schwenkelement relativ zu dem Aufnahmeelement schwenkbar angeordnet sein. Das Schwenkelement kann einen Vorsprung aufweisen, welcher in den Aufnahmeraum des Aufnahmeelements hineinragt, sodass, auf ein Einführen des Einsteckelements in den Aufnahmeraum des Aufnahmeelements hin, das Einsteckelement derart auf den Vorsprung des Schwenkelements einwirkt, dass ein Verschwenken des Schwenkelements aus der ersten Position in die zweite Position hervorgerufen wird.

In der ersten Position des Schwenkelements kann das an dem Schwenkelement angebrachte Indikatorelement von einem Abschnitt des Aufnahmeelements zumindest teilweise verdeckt sein, wohingegen das Indikatorelement des Schwenkelements in der zweiten Position des Schwenkelements, d.h. der dem vollständigen Einführen des Einsteckelements in den Aufnahmeraum des Aufnahmeelements zugeordneten Position, von einer Außenseite der Fluidkopplung her erkennbar bzw. erfassbar sein kann.

Insbesondere kann das Schwenkelement mit einer Rasteinrichtung ausgebildet sein, welche mit demjenigen Element, beispielsweise dem Aufnahmeelement, in Rasteingriff treten kann, zu welchem sich das Schwenkelement aus der ersten Position in die zweite Position davon relativ verlagern kann. Auf diese Weise kann gewährleistet werden, dass das Schwenkelement nicht unbeabsichtigt verlagert wird und insbesondere erst dann aus der ersten Position in die zweite Position des Schwenkelements überführt wird, wenn das Einsteckelement ausreichend in den Aufnahmeraum des Aufnahmeelements eingeführt ist und das Sicherungselement aus der Freigabestellung in die Verriegelungsstellung verlagert werden kann.

Das Einsteckelement kann in der Verriegelungsstellung des Sicherungselements derart auf das Schwenkelement, insbesondere den Vorsprung des Schwenkelements, einwirken, dass eine Verlagerung des Schwenkelements aus der zweiten Position verhindert wird.

Das Sicherungselement kann ferner wenigstens eine Aussparung aufweisen, welche dazu geeignet ist, mit wenigstens einem Vorsprung am Halteelement einzugreifen. So kann eine Aussparung des Sicherungselements mit einem Rastelement des Halteelements eingreifen, welches wiederum dazu eingerichtet ist, das Halteelement und/oder das Sicherungselement am Aufnahmeelement, insbesondere gegenüber axialen Zugkräften entgegen der Einführrichtung des Einsteckelements, zu sichern. Alternativ oder zusätzlich kann eine Aussparung des Sicherungselements mit einem Stabilisierungssteg des Halteelements eingreifen (insbesondere weist die Fluidkopplung am Sicherungselement zwei symmetrisch angeordnete Aussparungen und am Halteelement zwei dazu passende Stabilisierungsstege auf, oder umgekehrt), welcher wiederum in Wechselwirkung mit der jeweiligen Aussparung dazu eingerichtet ist, das Sicherungselement am Aufnahmeelement, insbesondere gegenüber axialen Zugkräften entgegen der Einführrichtung des Einsteckelements, zu sichern.

Im Folgenden wird die vorliegende Erfindung anhand eines Ausführungsbeispiels in größerem Detail mit Bezug auf die begleitenden Zeichnungen näher beschrieben werden. Es stellt dar:
- Figur 1: eine perspektivische Explosionsansicht einer erfindungsgemäßen Fluidkopplung;
- Figur 2a: eine Seitenquerschnittsansicht der Ausführungsform aus Figur 1 ohne eingeführtes Einsteckelement;
- Figur 2b: eine weitere Seitenquerschnittsansicht der Ausführungsform aus Figur 1 ohne eingeführtes Einsteckelement entlang der Schnittlinie IIb-IIb aus Figur 2a;
- Figur 2c: eine weitere Seitenquerschnittsansicht der Ausführungsform aus Figur 1 ohne eingeführtes Einsteckelement entlang der Schnittlinie IIc-IIc aus Figur 2a;
- Figur 3a: eine Seitenquerschnittsansicht der Ausführungsform aus Figur 1 mit eingeführtem Einsteckelement;
- Figur 3b: eine weitere Seitenquerschnittsansicht der Ausführungsform aus Figur 1 mit eingeführtem Einsteckelement entlang der Schnittlinie IIIb-IIIb aus Figur 3a;
- Figur 3c: eine weitere Seitenquerschnittsansicht der Ausführungsform aus Figur 1 mit eingeführtem Einsteckelement entlang der Schnittlinie IIIc-IIIc aus Figur 3a;
- Figur 4: eine Seitenquerschnittsansicht der Ausführungsform aus Figur 1 mit eingeführtem Werkzeug;
- Figur 5: eine perspektivische Explosionsansicht einer zweiten Ausführungsform einer erfindungsgemäßen Fluidkopplung;
- Figur 6: eine Seitenansicht der Fluidkopplung aus Figur 2 in deren Freigabestellung;
- Figur 7: eine Seitenansicht der Fluidkopplung aus Figur 5 in deren Verriegelungsstellung; und
- Figur 8: eine Seitenquerschnittsansicht der Fluidkopplung aus Figur 7.

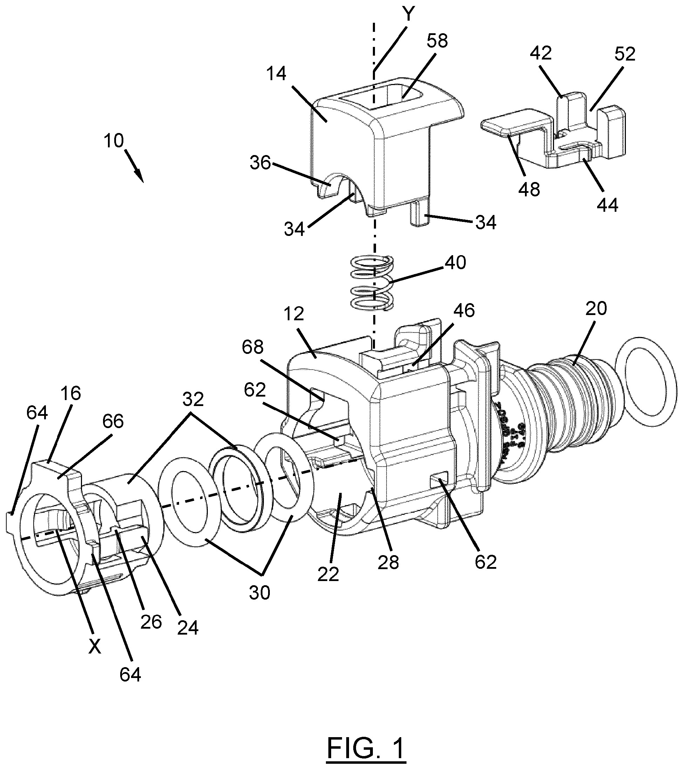

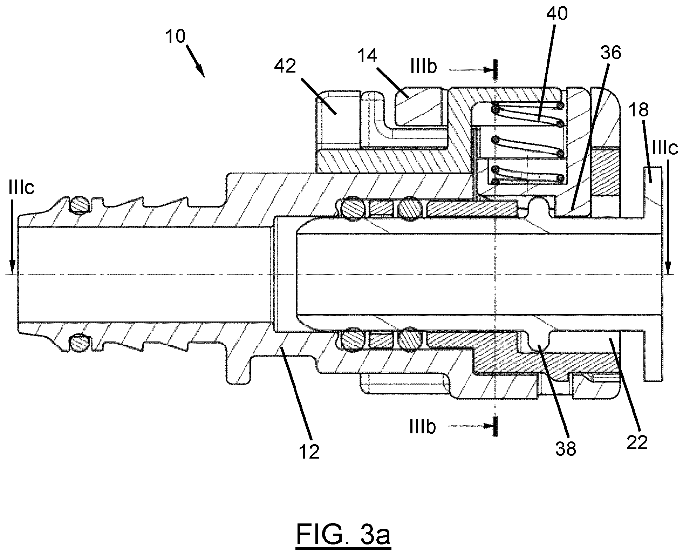

In Figur 1 ist eine erfindungsgemäße Fluidkopplung allgemein mit dem Bezugszeichen 10 bezeichnet. Die Fluidkopplung 10 umfasst ein Aufnahmeelement 12, ein Sicherungselement 14, ein Halteelement 16 und ein Einsteckelement 18 (siehe Figur 3a).

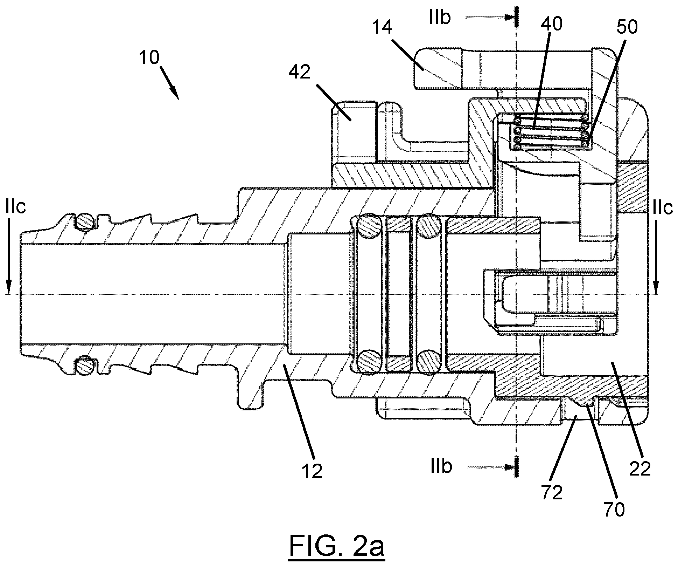

Das Aufnahmeelement 12 weist an seinem in Figur 1 rechts dargestellten Ende einen Flansch 20 auf, welcher dazu eingerichtet ist, mit einer Fluidleitung verbindbar zu sein. An seinem dem Flansch 20 gegenüberliegenden Ende weist das Aufnahmeelement 12 einen Aufnahmeraum 22 auf, in welchen das Einsteckelement 18 einführbar ist (siehe Figuren 2a und 3a).

Das Halteelement 16 ist hier als Ring ausgeführt, an welchem diametral gegenüberliegend zwei radial federnde Haltearme 24 angeordnet sind. Jeder der Haltearme 24 weist einen sich nach radial innen erstreckenden Vorsprung 26 auf. Die Haltearme 24 werden in dem Aufnahmeelement 12 in dafür vorgesehenen Ausnehmungen 28 aufgenommen. Im Fall des ringförmig ausgebildeten Halteelements 16 kann, bei mit dem Aufnahmeelement 12 verbundenem Halteelement 16, der Aufnahmeraum 22 auch als durch die zentrale Öffnung des Halteelements 16 definiert erachtet werden.

In dem in Figur 1 dargestellten Ausführungsbeispiel werden das Halteelement 16 sowie zwei O-Ringe 30 und zwei Abstandshalter 32 mit dem Aufnahmeelement 12 entlang einer Einführachse X verbunden, welche hier zugleich eine Längsmittelachse X des Aufnahmeelements 12 bzw. des Aufnahmeraums 22 bildet. Einer der beiden Abstandshalter 32 ist hier mit dem Halteelement 16 integral verbunden.

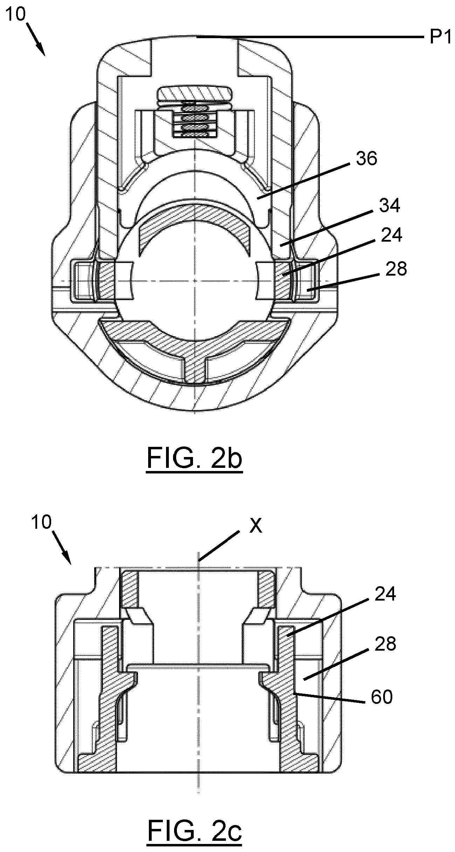

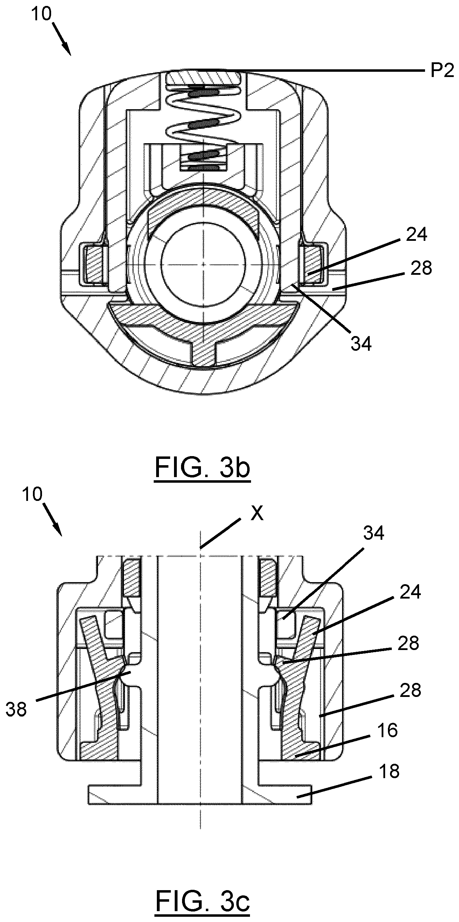

Das Sicherungselement 14 ist in Figur 1 in einer von dem Aufnahmeelement 12 gelösten Position dargestellt und kann entlang einer Verlagerungsachse Y in das Aufnahmeelement 12 eingeführt werden. Die Verlagerungsachse Y ist in dem hier dargestellten Ausführungsbeispiel orthogonal zu der Einführachse X. An zwei in Bezug auf die Achse X diametral gegenüberliegenden Abschnitten weist das Sicherungselement 14 an seiner Außenseite zwei Vorsprünge 34 auf, welche dazu eingerichtet sind, mit den Haltearmen 24 in einer Freigabestellung P1 (siehe Figur 2b) in Kontakt zu treten, wobei der Kontakt hier in Richtung der Verlagerungsachse Y stattfindet, das heißt ein Haltearm 24 und ein zugeordneter Vorsprung 34 sind in der Richtung der Verlagerungsachse Y benachbart angeordnet. Die Haltearme 24 verhindern hier eine weitere Verlagerung des Sicherungselements 14 in das Aufnahmeelement 12 entlang der Verlagerungsachse Y. Ferner weist das Sicherungselement 14 einen Sicherungsabschnitt 36 auf, welcher dazu eingerichtet ist, mit einem entsprechenden Gegenelement 38 (siehe Figur 3a) des Einsteckelements 18 in Eingriff zu treten, um in einer Verriegelungsstellung P2 (siehe Figur 3b) eine Verlagerung des Einsteckelement 18 aus dem Aufnahmeelement 12 heraus zu verhindern.

Die Fluidkopplung 10 umfasst ferner ein Federelement 40 und ein Abstützelement 42. Das Abstützelement 42 weist eine Rasteinrichtung 44 auf, welche dazu eingerichtet ist, mit entsprechenden Ausnehmungen 46 an dem Aufnahmeelement 12 in Eingriff zu treten, um das Abstützelement 42 an dem Aufnahmeelement 12 zu sichern. In einer zu der Rasteinrichtung 44 erhabenen (nach radial außen versetzten) Position weist das Abstützelement 42 einen Anlageabschnitt 48 auf, gegen welchen ein Ende des Federelements 40 anliegt. Das andere Ende des Federelements 40 liegt gegen das Sicherungselement 14 in einer dazu eingerichteten Ausnehmung 50 an (siehe z.B. Figur 2a).

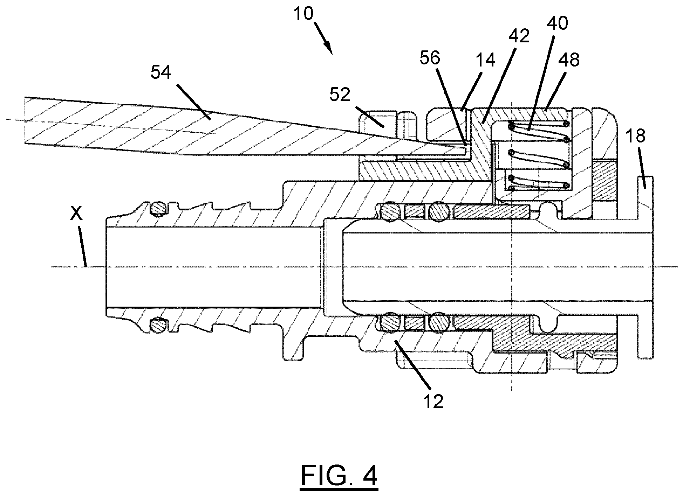

Das Abstützelement 42 weist eine Durchbrechung 52 auf, welche dazu eingerichtet ist, dass, wie auch in Figur 4 dargestellt, ein Werkzeug 54 (hier einen Schlitz-Schraubendreher) durch die Durchbrechung 52 hindurch und in einen Freiraum 56 eingeführt werden kann, welcher zwischen dem Sicherungselement 14 und dem Abstützelement 42 gebildet ist. Auf ein Drehen und/oder Hebeln des Werkzeugs 54 in der in Figur 4 dargestellten Stellung, kann das Sicherungselement 14 entgegen der Federkraft des Federelements 40 aus der Verriegelungsstellung P2 in Richtung einer Freigabestellung P1 verlagert werden (siehe Figur 2b). Wird das Sicherungselement 14 weit genug aus der Verriegelungsstellung P2 in Richtung der Freigabestellung P1 verlagert, kann das Einsteckelement 18 entlang der Achse X entgegen der Einführrichtung aus dem Aufnahmeelement 12 herausgezogen werden.

Ferner ist in Figur 1 zu erkennen, dass das Sicherungselement 14 eine sich entlang der Verlagerungsachse Y erstreckende Öffnung 58 aufweist, welche derart geformt ist, dass der Anlageabschnitt 48 in die Öffnung 58 eintreten kann. Somit kann in der Verriegelungsstellung P2 die in Bezug auf die Achse X radial äußere Seite des Anlageabschnitts 48 im Wesentlichen bündig zu einer radial äußeren Seite des Sicherungselements 14 angeordnet sein, welche hier die Öffnung 58 umgibt.

In Figur 2a ist eine Seitenquerschnittsansicht der in Figur 1 dargestellten Ausführungsform einer erfindungsgemäßen Fluidkopplung 10 im zusammengebauten Zustand, mit Ausnahme des Einsteckelements 18, dargestellt. Dabei ist zu erkennen, dass das Federelement 40 zwischen dem Abstützelement 42 und dem Sicherungselement 14 nahezu vollständig komprimiert vorliegt.

In der weiteren Seitenquerschnittsansicht der Figur 2b ist zu sehen, dass die federnden Haltearme 24 mit den Vorsprüngen 34 des Sicherungselements 14 in Kontakt stehen, wodurch eine durch die Federkraft des Federelements 40 betätigte Verlagerung des Sicherungselements 14 aus der in Figur 2b gezeigten Freigabestellung P1 relativ zu dem Aufnahmeelement 12 verhindert wird.

In der weiteren Seitenquerschnittsansicht der Figur 2c ist dargestellt, dass die federnden Haltearme 24 in den jeweiligen Ausnehmungen 28 in einer nicht-ausgelenkten Stellung im Wesentlichen parallel zu der Achse X angeordnet sind. Es ist hier auch zu erkennen, dass die in Bezug auf die Längsmittelachse X radial äußeren Seiten der federnden Arme 24 eine Stufe 60 aufweisen, an welcher die radial äußere Seite eines jeweiligen federnden Arms 24 um eine vorbestimmte Höhe nach radial innen zurücktritt. Die ermöglicht einen größeren Verlagerungsweg der Haltearme 24 nach radial außen, wie in Figur 3c zu sehen ist.

Figur 3a zeigt eine zu Figur 2a analoge Schnittansicht, wobei das Einsteckelement 18 in den Aufnahmeraum 22 des Aufnahmeelements 12 eingeführt ist. Das hier ringförmig vorstehende Gegenelement 38 des Einsteckelements 18 ist mit den Vorsprüngen 26 der federnden Haltearme 24 des Halteelements 16 in Kontakt getreten (siehe Figur 3c) und hat die federnden Haltearme 24 nach radial außen verlagert.

Die federnden Haltearme 24 sind in Figur 3b außer Eingriff mit den Vorsprüngen 36 des Sicherungselements 14 getreten, so dass eine Verlagerung des Sicherungselements 14 aus der Freigabestellung P1 gemäß Figur 2b in eine Verriegelungsstellung P2 gemäß Figur 3b durchgeführt werden kann, welche durch die Federkraft des Federelements 40 angetrieben wird.

In der in den Figuren 3a bis 3c dargestellten Verriegelungsstellung P2 wird das ringförmige Gegenelement 38 des Einsteckelements 18 von dem Sicherungsabschnitt 36 des Sicherungselements 14 teilweise hintergriffen, so dass eine Verlagerung des Einsteckelements 18 aus dem Aufnahmeelement 12 heraus entlang der Achse X verhindert wird. Natürlich ist es denkbar, hierbei zusätzlich eine Rotationssicherung des Einsteckelements 18 relativ zu dem Sicherungselement 14 bzw. dem Aufnahmeelement 12 vorzusehen. In der Verriegelungsstellung P2 liegen die Vorsprünge 34 des Sicherungselements 14 gegen Flächen an, welche durch seitliche Durchgangsöffnungen 62 erzeugt sind, welche sich in einer Richtung durch das Aufnahmeelement 12 hindurch erstrecken, welche sowohl orthogonal zu der Längsmittelachse X als auch zu der Verlagerungsachse Y ausgerichtet ist. Die Durchgangsöffnungen 62 erzeugen durch einen jeweiligen Schnitt mit den Ausnehmungen 28 jeweilige Vertiefungen, in welche die Vorsprünge 34 des Sicherungselements 14 eintreten können, um einen Verlagerungsweg des Sicherungselements 14 aus der Freigabestellung P1 in die Verriegelungsstellung P2 zu vergrößern. Demzufolge kann auch eine radiale Erstreckung des Gegenelements vergrößert werden, wodurch wiederum ein Widerstand der Sicherung gegen Auszugskräfte des Einsteckelements 18 aus dem Aufnahmeelement 12 erhöht werden können.

Mit erneutem Bezug auf Figur 1 ist zu erkennen, dass das Halteelement 16 hier zwei seitliche Vorsprünge 64 aufweist, welche dazu eingerichtet sind, in die Ausnehmungen 28 einzugreifen. Um eine rotatorisch Ausrichtung des Halteelements 16 relativ zu dem Aufnahmeelement 12 eindeutig zu definieren, ist an dem Halteelement 16 ferner ein weiterer Vorsprung 66 vorgesehen, welcher dazu eingerichtet ist, in eine dazu passende Ausnehmung 68 des Aufnahmeelements 12 einzugreifen.

In der Zusammenschau der Figuren 2a bis 3c wird zusätzlich deutlich, dass sich bei der hier dargestellten Ausführungsform die seitlichen Vorsprünge 64, die federnden Haltearme 24, die Ausnehmungen 28 und die relative Verlagerung der federnden Haltearme 24 nach radial außen im Wesentlichen in einer gleichen gemeinsamen Ebene erstrecken, welche beispielsweise in den Figuren 2c und 3c durch die Blattebene gebildet wird.

Das Halteelement 16 ist in dieser Ausführungsform als von dem Aufnahmeelement 12 gesondertes Bauteil ausgebildet und mit diesem unter Verwendung von Rastpaaren verbunden. Zum Beispiel ist in Figur 2a zu erkennen, dass ein Vorsprung 70 des Halteelements 16 in eine fensterartige Ausnehmung 72 (hier eine Durchgangsöffnung durch die Wandung des Aufnahmeelements 12) eingreift, sobald das Halteelement 16 vollständig in das Aufnahmeelement 16 eingeschoben worden ist.

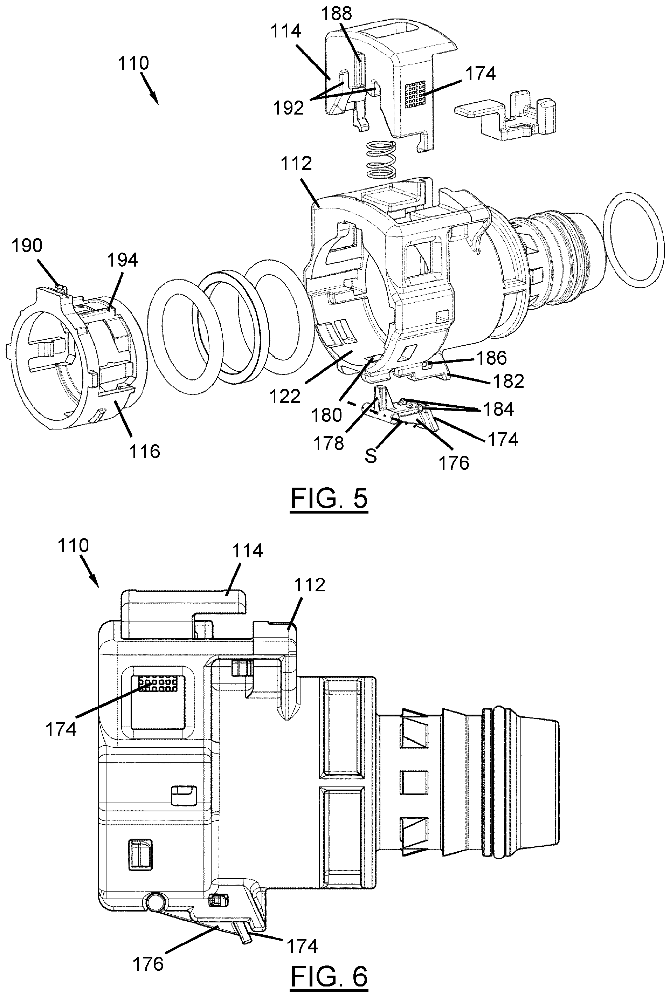

In Figur 5 ist eine zweite Ausführungsform der Fluidkopplung 10 gezeigt, welche allgemein mit dem Bezugszeichen 110 versehen ist. Es sei an dieser Stelle darauf hingewiesen, dass die zweite Ausführungsform der Fluidkopplung 110 in weiten Teilen, wenigstens funktionell, identisch zu der ersten Ausführungsform der Fluidkopplung 10 ist, sodass nachfolgend maßgeblich auf die Unterschiede der zweiten Ausführungsform der Fluidkopplung 110 zu der ersten Ausführungsform der Fluidkopplung 10 eingegangen werden wird. Analoge Komponenten der Fluidkopplung 110 zu denen der Fluidkopplung 10 werden mit Bezugszeichen bezeichnet werden, welche im Vergleich zu der Fluidkopplung 10 um die Zahl 100 erhöht sind. Im Übrigen sei auf die Beschreibung in Bezug auf die erste Ausführungsform der Fluidkopplung 10 hingewiesen.

Die Fluidkopplung 110 umfasst ein Sicherungselement 114, welches an gegenüberliegenden Seitenflächen jeweils ein Indikatorelement 174 (nur eines ist in Figur 5 erkennbar) aufweist, wobei das Indikatorelement 174 hier als ein DMC-Code ausgebildet ist.

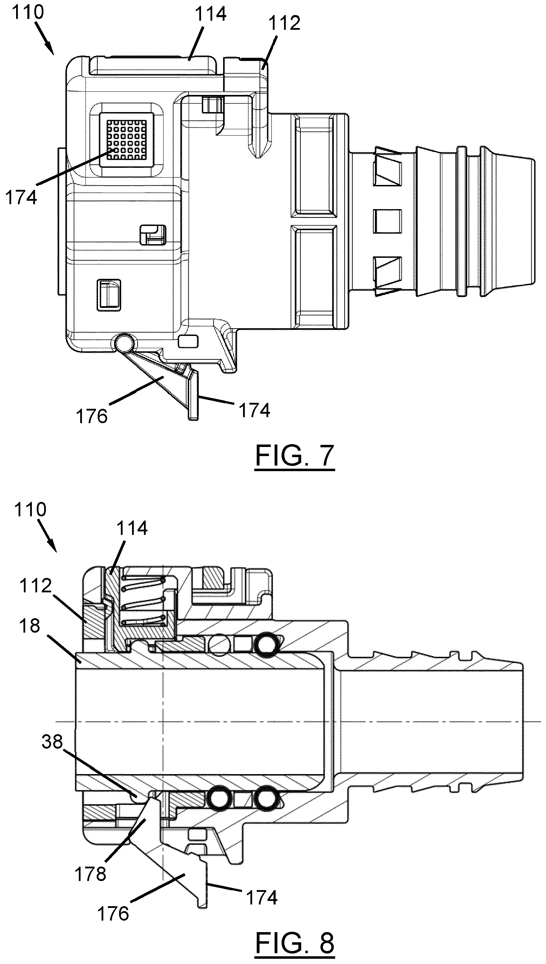

Darüber hinaus umfasst die Fluidkopplung 110 ein Schwenkelement 176, welches an einem Aufnahmeelement 112 der Fluidkopplung 110 um eine Schwenkachse S schwenkbar angebracht ist. Das Schwenkelement 176 umfasst einen Vorsprung 178, welcher durch eine Öffnung 180 des Aufnahmeelements 112 hindurch in einen Aufnahmeraum 122 derart vorsteht, dass der Vorsprung 178 des Schwenkelements 176 mit einem Einsteckelement 18 (s. Fig. 8) in Kontakt tritt, wenn das Einsteckelement 18 in den Aufnahmeraum 122 des Aufnahmeelements 112 eingeführt wird.

An einer entsprechenden Fläche des Schwenkelements 176 ist ein weiteres Indikatorelement 174 angeordnet, welches in einer Ausgangsposition des Schwenkelements 176 an dem Sicherungselement 112 zumindest teilweise von einem Vorsprung 182 des Sicherungselements 112 überlagert ist, sodass das Indikatorelement 174 an dem Schwenkelement 176 nicht vollständig erkennbar bzw. nicht maschinell erfassbar ist. Diese Ausgangsposition des Schwenkelements 176 kann auch als eine erste Position des Schwenkelements 176 bezeichnet werden, welche der Freigabestellung des Sicherungselements 114 relativ zu dem Aufnahmeelement 112 zugeordnet ist.

Um zu verhindern, dass das Schwenkelement 176 unbeabsichtigt aus der ersten Position heraus verlagert wird, weist das Schwenkelement 176 eine Rasteinrichtung 184 auf, welche dazu eingerichtet ist, mit einer entsprechenden Gegenrasteinrichtung 186 des Aufnahmeelements 112 in Eingriff zu treten.

Diese erste Position des Schwenkelements 176 relativ zu dem Aufnahmeelement 112 ist in Figur 6 zu erkennen. In Figur 6 ist auch zu sehen, dass die Indikatorelemente 174 an dem Sicherungselement 114 und an dem Schwenkelement 176 von dem Aufnahmeelement 112 teilweise verdeckt werden.

Wird nun das Einsteckelement 18 in den Aufnahmeraum 122 des Aufnahmeelements 112 eingeschoben, so tritt das Einsteckelement dann, wenn auch das Sicherungselement 114 aus der Freigabestellung P1 in die Verriegelungsstellung P2 verlagerbar ist, mit dem Vorsprung 178 des Schwenkelements 176 in Kontakt. Über die auf den Vorsprung 178 des Schwenkelements 176 ausgeübte Kraft und den Schwenkmechanismus um die Schwenkachse S des Schwenkelements 176 relativ zu dem Aufnahmeelement 112 wird derart eine Kraft auf die Rasteinrichtung 184 des Schwenkelements 176 ausgeübt, dass die Rasteinrichtung 184 außer Eingriff von der Gegenrasteinrichtung 186 tritt und das Schwenkelement 176 aus der ersten Position in eine zweite Position verlagert wird, in welcher das an dem Schwenkelement 176 angeordnete Indikatorelement 174 von einer Außenseite der Fluidkopplung 110 her vollständig erkennbar bzw. erfassbar ist.

Dieser der Verriegelungsstellung P2 des Sicherungselements 114 an dem Aufnahmeelement 112 zugeordnete Zustand, das heißt die zweite Position, des Schwenkelements 176 ist in Figur 7 dargestellt. Dabei ist zu erkennen, dass auch die Indikatorelemente 174 des Sicherungselements 114 durch die Durchbrechungen des Aufnahmeelements 112 hindurch von einer Außenseite her vollständig erkennbar bzw. maschinell erfassbar angeordnet sind.

In Figur 8 ist nun die Verriegelungsstellung P2 der Fluidkopplung 110 aus Figur 7 in einer Seitenquerschnittsansicht dargestellt. Dabei ist insbesondere zu erkennen, dass das Gegenelement 38 des Einsteckelements 18, welches hier als ein in Umfangsrichtung verlaufender ringförmiger Bund ausgebildet ist, mit dem Vorsprung 178 des Schwenkelements 176 in Kontakt getreten ist und das Schwenkelement 176 in die zweite Position verlagert hat. Dadurch, dass das Einsteckelement 18 über die Wechselwirkung zwischen dem Gegenelement 38 und dem Sicherungselement 114 an einer Verlagerung aus dem Aufnahmeraum 122 des Aufnahmeelements 112 heraus gehindert wird, kann, aufgrund der Wechselwirkung zwischen dem Gegenelement 38 und dem Vorsprung 178 des Schwenkelements 176, auch verhindert werden, dass das Schwenkelement 176 im verriegelten Zustand der Fluidkopplung 110 zurück in Richtung der ersten Position des Schwenkelements 176 verlagert werden kann.

Mit erneutem Bezug auf Figur 5, ist zu erkennen, dass die hier gezeigte Ausführungsform der Fluidkopplung 110 am Sicherungselement 114 eine erste Aussparung 188 aufweist, welche dazu geeignet ist, mit einem Rastelement 190 des Halteelements 116 einzugreifen. So kann die erste Aussparung 188 des Sicherungselements 114 in Wechselwirkung mit dem Rastelement 190 des Halteelements 116 das Halteelement und/oder das Sicherungselement am Aufnahmeelement, insbesondere gegenüber axialen Zugkräften entgegen der Einführrichtung des Einsteckelements, sichern.

Zusätzlich weist die hier gezeigte Ausführungsform der Fluidkopplung 110 am Sicherungselement 114 zwei zweite Aussparungen 192 auf. Eine jeweilige der beiden zweiten Aussparungen 192 des Sicherungselements 114 greift mit einem zugehörigen Stabilisierungssteg 194 des Halteelements 116 ein (nur einer der beiden Stabilisierungsstege 194 ist in Figur 5 zu erkennen). Die Stabilisierungsstege 194 des Halteelements 116 sind in Wechselwirkung mit der jeweiligen zweiten Aussparung 192 dazu eingerichtet, das Sicherungselement am Aufnahmeelement, insbesondere gegenüber axialen Zugkräften entgegen der Einführrichtung des Einsteckelements, zu sichern.

## Patentansprüche

1. Fluidkopplung (10), umfassend
ein Aufnahmeelement (12),
ein Sicherungselement (14),
ein getrennt von dem Sicherungselement (14) ausgebildetes Halteelement (16), und
ein Einsteckelement (18),
wobei das Einsteckelement (18) in einen Aufnahmeraum (22) des Aufnahmeelements (12) entlang einer Einführachse (X) einführbar ist, wobei das Sicherungselement (14) dazu eingerichtet ist, zwischen einer Freigabestellung (P1) und einer Verriegelungsstellung (P2) entlang einer Verlagerungsachse (Y) verlagerbar zu sein,
wobei das Sicherungselement (14) dazu eingerichtet ist, in seiner Freigabestellung (P1), ohne ein in den Aufnahmeraum (22) des Aufnahmeelements (12) eingeführtes Einsteckelement (18), derart mit dem Halteelement (16) in Eingriff zu stehen, dass eine Verlagerung des Sicherungselements (14) aus der Freigabestellung (P1) in Richtung der Verriegelungsstellung (P2) verhindert wird,
wobei das Einsteckelement (18) dazu eingerichtet ist, beim Einführen des Einsteckelements (18) in den Aufnahmeraum (22) des Aufnahmeelements (12), mit dem Halteelement (16) derart wechselzuwirken, dass eine Verlagerung des Sicherungselements (14) aus der Freigabestellung (P1) in die Verriegelungsstellung (P2) ermöglicht wird,
wobei die Fluidkopplung (10) ferner ein gesondert ausgebildetes Federelement (40) umfasst, welches dazu eingerichtet ist, auf das Sicherungselement (14) eine Federkraft derart auszuüben, dass das Sicherungselement (14) in Richtung seiner Verriegelungsstellung (P2) vorbelastet ist, sodass, beim Einführen des Einsteckelements (18) in den Aufnahmeraum (22) des Aufnahmeelements (12), das Sicherungselement (14) aufgrund der Federkraft des Federelements (40) aus der Freigabestellung (P1) in die Verriegelungsstellung (P2) verlagert wird,
**dadurch gekennzeichnet, dass** die Fluidkopplung (10) ferner ein gesondert ausgebildetes Abstützelement (42) umfasst, welches einen Anlageabschnitt (48) aufweist, gegen welchen das Federelement (40) anliegt, wobei das Abstützelement (42) mit dem Aufnahmeelement (12) verbindbar ist und die Federkraft des Federelements (40) zwischen dem Abstützelement (42) und dem Sicherungselement (14) wirkt.

2. Fluidkopplung (10) nach Anspruch 1,
**dadurch gekennzeichnet, dass**, in der Verriegelungsstellung (P2) des Sicherungselements (14), eine, in Bezug auf eine Längsmittelachse (X) des Aufnahmeelements (12) betrachtet, radial äußere Seite des Anlageabschnitts (48) des Abstützelements (42) mit einer, ebenfalls in Bezug auf die Längsmittelachse (X) des Aufnahmeelements (12) betrachtet, radial äußeren Seite des Sicherungselements (14) im Wesentlichen bündig ist.

3. Fluidkopplung (10) nach einem der vorhergehenden Ansprüche,
**dadurch gekennzeichnet, dass** das Halteelement (16) wenigstens einen federnden Haltearm (24) umfasst, welcher sich parallel zu der Einführrichtung (X) des Einsteckelements (18) in den Aufnahmeraum (22) erstreckt, und
dass das Einsteckelement (18) dazu eingerichtet ist, beim Einführen des Einsteckelements (18) in den Aufnahmeraum (22) des Aufnahmeelements (12), den wenigstens einen federnden Haltearm (24) des Halteelements (16) nach radial außen zu verlagern, um so eine Verlagerung des Sicherungselements (14) aus der Freigabestellung (P1) in die Verriegelungsstellung (P2) zu ermöglichen.

4. Fluidkopplung (10) nach dem vorhergehenden Anspruch,
**dadurch gekennzeichnet, dass** das Sicherungselement (14) an demjenigen Abschnitt (34), welcher mit dem federnden Haltearm (24) derart in Eingriff steht, dass eine Verlagerung des Sicherungselements (14) aus der Freigabestellung (P1) in Richtung der Verriegelungsstellung (P2) verhindert wird, wenigstens einen Vorsprung aufweist, welcher dazu eingerichtet ist, mit dem federnden Haltearm (24) so einzugreifen, dass eine Verlagerung des federnden Haltearms (24) nach radial innen im Wesentlichen verhindert ist und/oder dass eine Verlagerung des Abschnitts (34) des Sicherungselements (14) nach radial außen im Wesentlichen verhindert ist.

5. Fluidkopplung (10) nach Anspruch 3 oder 4,
**dadurch gekennzeichnet, dass** der Abschnitt (34) des Sicherungselements (14), welcher mit dem federnden Haltearm (24) derart in Eingriff steht, dass eine Verlagerung des Sicherungselements (14) aus der Freigabestellung (P1) in Richtung der Verriegelungsstellung (P2) verhindert wird, in der Verriegelungsstellung (P2) des Sicherungselements (14) durch eine Öffnung des Aufnahmeelements (12) nach außen hindurchtritt, insbesondere wobei die Öffnung an dem Aufnahmeelement (12) an einer zu dem Federelement (40) diametral entgegengesetzten Seite angeordnet ist.

6. Fluidkopplung (10) nach einem der Ansprüche 3 bis 5,
**dadurch gekennzeichnet, dass** sich der Haltearm (24) zu seinem freien Ende hin verjüngt und/oder eine in Bezug auf eine Längsmittelachse (X) des Aufnahmeelements (12) radial äußere Seite des Haltearms eine Stufe (60) aufweist, an welcher die äußere Seite, in einer Richtung zu seinem freien Ende hin betrachtet, nach radial innen zurücktritt.

7. Fluidkopplung (10) nach einem der vorhergehenden Ansprüche,
**dadurch gekennzeichnet, dass** das Federelement (40) eine Schraubenfeder, insbesondere eine Druckfeder, ist, welche aus einem Metall, insbesondere Federstahl, ausgebildet ist.

8. Fluidkopplung (10) nach einem der vorhergehenden Ansprüche,
**dadurch gekennzeichnet, dass** das Abstützelement (42) dazu eingerichtet ist, derart mit dem Aufnahmeelement (12) verrastet zu werden, dass es zerstörungsfrei unlösbar mit dem Aufnahmeelement (12) verbunden ist.

9. Fluidkopplung (10) nach einem der vorhergehenden Ansprüche,
**dadurch gekennzeichnet, dass** das Aufnahmeelement (12) wenigstens eine Durchgangsöffnung (62) aufweist, welche sich von einer Außenseite nach radial innen und im Wesentlichen orthogonal zu sowohl der Einführrichtung (X) des Einsteckelements (18) in das Aufnahmeelement (12) als auch zu der Verlagerungsrichtung (Y) des Sicherungselements (14) erstreckt.

10. Fluidkopplung (10) nach einem der vorhergehenden Ansprüche,
**dadurch gekennzeichnet, dass** in einem Zustand, in welchem das Sicherungselement (14) an dem Aufnahmeelement (12), insbesondere in der Verriegelungsstellung (P2), angeordnet ist, ein Freiraum (56) zwischen einem Abschnitt des Sicherungselements (14) und dem Abstützelement (42) angeordnet ist, welcher zum Einführen eines Werkzeugs (54) geeignet ist, um damit das Sicherungselement (14) aus der Verriegelungsstellung (P2) in die Freigabestellung (P1) zu verlagern.

11. Fluidkopplung (10) nach einem der vorhergehenden Ansprüche,
**dadurch gekennzeichnet, dass** ein Sicherungsabschnitt (36) des Sicherungselements (14), welcher in der Verriegelungsstellung (P2) des Sicherungselements (14) mit einem Gegenelement (38) des Einsteckelements (18) in Eingriff steht, entlang der Einführrichtung (X) des Einsteckelements (18) in das Aufnahmeelement (12) betrachtet, eine größere longitudinale Erstreckung aufweist als eine longitudinale Erstreckung des Gegenelements (38).

12. Fluidkopplung (10) nach einem der vorhergehenden Ansprüche,
**dadurch gekennzeichnet, dass** das Halteelement (16) als von dem Aufnahmeelement (12) gesondertes Bauteil ausgebildet ist und dazu eingerichtet ist, mit dem Aufnahmeelement (12) zu verrasten, insbesondere unter Verwendung von wenigstens zwei, bevorzugt unter Verwendung von drei, Rastpaaren (70, 72).

13. Fluidkopplung (10) nach einem der vorhergehenden Ansprüche,
**dadurch gekennzeichnet, dass** das Halteelement (16) wenigstens zwei Vorsprünge (64, 66) aufweist, welche dazu eingerichtet sind, in wenigstens zwei entsprechende Ausnehmungen (28, 68) des Aufnahmeelements (12) einzugreifen, um eine Führung des Halteelements (16) beim Einführen in das Aufnahmeelement (12) bereitzustellen.

14. Fluidkopplung (10) nach dem vorhergehenden Anspruch,
**dadurch gekennzeichnet, dass** sich die Ausnehmungen (28, 68) des Aufnahmeelements (12) im Wesentlichen parallel zu der Einführrichtung (X) des Einsteckelements (18) in das Aufnahmeelement (12) in das Aufnahmeelement (12) erstrecken.

## Claims

1. Fluid coupling (10), comprising
a receiving element (12),
a securing element (14),
a retaining element (16) formed separately from the securing element (14), and
a plug-in element (18),
wherein the plug-in element (18) can be inserted into a receiving space (22) of the receiving element (12) along an insertion axis (X),
wherein the securing element (14) is designed to be displaceable between a release position (P1) and a locking position (P2) along a displacement axis (Y),
wherein the securing element (14) is designed to, in its release position (P1), engage with the retaining element (16) without a plug-in element (18) inserted into the receiving space (22) of the receiving element (12), in such a way that a displacement of the securing element (14) out of the release position (P1) in the direction of the locking position (P2) is prevented,
wherein the plug-in element (18) is designed to interact with the retaining element (16) when the plug-in element (18) is inserted into the receiving space (22) of the receiving element (12) in such a way that a displacement of the securing element (14) out of the release position (P1) into the locking position (P2) is made possible,
wherein the fluid coupling (10) further comprises a separately formed spring element (40) which is designed to exert a spring force on the securing element (14) such that the securing element (14) is preloaded in the direction of its locking position (P2), so that when the plug-in element (18) is inserted into the receiving space (22) of the receiving element (12), the securing element (14) is displaced out of the release position (P1) into the locking position (P2) due to the spring force of the spring element (40),
**characterized in that** the fluid coupling (10) further comprises a separately formed support element (42) which has a contact portion (48) against which the spring element (40) rests, wherein the support element (42) is connectable to the receiving element (12) and the spring force of the spring element (40) acts between the support element (42) and the securing element (14).

2. Fluid coupling (10) according to claim 1,
**characterized in that**, in the locking position (P2) of the securing element (14), a radially outer side of the contact portion (48) of the support element (42), viewed with respect to a longitudinal center axis (X) of the receiving element (12), is substantially flush with a radially outer side of the securing element (14), also viewed with respect to the longitudinal center axis (X) of the receiving element (12).

3. Fluid coupling (10) according to any of the preceding claims,
**characterized in that** the retaining element (16) comprises at least one resilient retaining arm (24) which extends parallel to the direction of insertion (X) of the plug-in element (18) into the receiving space (22), and **in that** the plug-in element (18) is designed to displace the at least one resilient retaining arm (24) of the retaining element (16) radially outward when the plug-in element (18) is inserted into the receiving space (22) of the receiving element (12), in order to thus allow a displacement of the securing element (14) out of the release position (P1) into the locking position (P2).

4. Fluid coupling (10) according to the preceding claim,
**characterized in that** the securing element (14) has at least one projection on that portion (34) which is engaged with the resilient retaining arm (24) in such a way that a displacement of the securing element (14) out of the release position (P1) in the direction of the locking position (P2) is prevented, which projection is designed to engage with the resilient retaining arm (24) in such a way that a displacement of the resilient retaining arm (24) radially inward is substantially prevented and/or that a displacement of the portion (34) of the securing element (14) radially outward is substantially prevented.

5. Fluid coupling (10) according to either claim 3 or claim 4,
**characterized in that** the portion (34) of the securing element (14) which is engaged with the resilient retaining arm (24) in such a way that a displacement of the securing element (14) out of the release position (P1) in the direction of the locking position (P2) is prevented passes outward through an opening in the receiving element (12) in the locking position (P2) of the securing element (14), in particular wherein the opening on the receiving element (12) is arranged on a side diametrically opposite the spring element (40).

6. Fluid coupling (10) according to any of claims 3 to 5,
**characterized in that** the retaining arm (24) tapers towards its free end and/or a radially outer side of the retaining arm with respect to a longitudinal center axis (X) of the receiving element (12) has a step (60) at which the outer side, viewed in a direction towards its free end, recedes radially inwards.

7. Fluid coupling (10) according to any of the preceding claims,
**characterized in that** the spring element (40) is a helical spring, in particular a compression spring, which is made of a metal, in particular spring steel.

8. Fluid coupling (10) according to any of the preceding claims,
**characterized in that** the support element (42) is designed to be latched to the receiving element (12) in such a way that it is connected to the receiving element (12) such that it cannot be detached non-destructively.

9. Fluid coupling (10) according to any of the preceding claims,
**characterized in that** the receiving element (12) has at least one through-opening (62) which extends from an outer side radially inward and substantially orthogonal to both the direction (X) of insertion of the plug-in element (18) into the receiving element (12) and to the direction (Y) of displacement of the securing element (14).

10. Fluid coupling (10) according to any of the preceding claims,
**characterized in that** in a state in which the securing element (14) is arranged on the receiving element (12), in particular in the locking position (P2), a free space (56) is arranged between a portion of the securing element (14) and the support element (42), which free space is suitable for inserting a tool (54) in order to thereby displace the securing element (14) from the locking position (P2) into the release position (P1).

11. Fluid coupling (10) according to any of the preceding claims,
**characterized in that** a securing portion (36) of the securing element (14), which in the locking position (P2) of the securing element (14) engages with a counter-element (38) of the plug-in element (18), viewed along the direction (X) of insertion of the plug-in element (18) into the receiving element (12), has a greater longitudinal extension than a longitudinal extension of the counter-element (38).

12. Fluid coupling (10) according to any of the preceding claims,
**characterized in that** the retaining element (16) is formed as a component separate from the receiving element (12) and is designed to latch with the receiving element (12), in particular using at least two, preferably using three, latching pairs (70, 72).

13. Fluid coupling (10) according to any of the preceding claims,
**characterized in that** the retaining element (16) has at least two projections (64, 66) which are designed to engage in at least two corresponding recesses (28, 68) of the receiving element (12) in order to provide guidance of the retaining element (16) during insertion into the receiving element (12).

14. Fluid coupling (10) according to the preceding claim,
**characterized in that** the recesses (28, 68) of the receiving element (12) extend into the receiving element (12) substantially parallel to the direction (X) of insertion of the plug-in element (18) into the receiving element (12).

## Revendications

1. Un accouplement fluidique (10) comprenant
un élément de réception (12),
un élément de sécurisation (14),
un élément de retenue (16) formé séparément de l'élément de sécurisation (14), et un élément d'insertion (18),
dans lequel l'élément d'insertion (18) peut être introduit dans un espace de réception (22) de l'élément de réception (12) le long d'un axe d'insertion (X), dans lequel l'élément de sécurisation (14) est agencé pour pouvoir se déplacer entre une position de libération (P1) et une position de verrouillage (P2) le long d'un axe de déplacement (Y),
dans lequel l'élément de sécurisation (14) est agencé pour, dans sa position de libération (P1), en l'absence d'un élément d'insertion (18) introduit dans l'espace de réception (22) de l'élément de réception (12), être en prise avec l'élément de retenue (16) de manière à empêcher un déplacement de l'élément de sécurisation (14) de la position de libération (P1) vers la position de verrouillage (P2),
dans lequel l'élément d'insertion (18) est agencé pour, lors de l'insertion de l'élément d'insertion (18) dans l'espace de réception (22) de l'élément de réception (12), interagir avec l'élément de retenue (16) de telle sorte qu'un déplacement de l'élément de sécurisation (14) de la position de libération (P1) vers la position de verrouillage (P2) soit rendu possible,
dans lequel l'accouplement fluidique (10) comprend en outre un élément à ressort (40) formé séparément agencé pour exercer une force élastique sur l'élément de sécurisation (14) de telle sorte que l'élément de sécurisation (14) soit précontraint en direction de sa position de verrouillage (P2), de sorte que, lors de l'insertion de l'élément d'insertion (18) dans l'espace de réception (22) de l'élément de réception (12), l'élément de sécurisation (14) soit déplacé de la position de libération (P1) vers la position de verrouillage (P2) sous l'effet de la force élastique de l'élément à ressort (40),
**caractérisé en ce que** l'accouplement fluidique (10) comprend en outre un élément d'appui (42) formé séparément, qui présente une partie d'appui (48) contre laquelle s'appuie l'élément à ressort (40), dans lequel l'élément d'appui (42) peut être relié à l'élément de réception (12) et la force élastique de l'élément à ressort (40) agit entre l'élément d'appui (42) et l'élément de sécurisation (14).

2. L'accouplement fluidique (10) selon la revendication 1,
**caractérisé en ce que**, dans la position de verrouillage (P2) de l'élément de sécurisation (14), une face, considérée par rapport à un axe médian longitudinal (X) de l'élément de réception (12), côté radialement extérieur de la partie d'appui (48) de l'élément d'appui (42) affleure sensiblement un côté radialement extérieur de l'élément de sécurisation (14), également vu par rapport à l'axe longitudinal central (X) de l'élément de réception (12).

3. L'accouplement fluidique (10) selon l'une des revendications précédentes,
**caractérisé en ce que** l'élément de retenue (16) comprend au moins un bras de retenue élastique (24) qui s'étend parallèlement à la direction d'insertion (X) de l'élément d'insertion (18) dans l'espace de réception (22), et
**en ce que** l'élément d'insertion (18) est agencé pour, lors de l'insertion de l'élément d'insertion (18) dans l'espace de réception (22) de l'élément de réception (12), déplacer vers l'extérieur dans le sens radial ledit au moins un bras de retenue élastique (24) de l'élément de retenue (16), afin de permettre ainsi un déplacement de l'élément de sécurisation (14) de la position de libération (P1) vers la position de verrouillage (P2).

4. L'accouplement fluidique (10) selon la revendication précédente,
**caractérisé en ce que** l'élément de sécurisation (14), au niveau de la partie (34) qui est en prise avec le bras de retenue élastique (24) de sorte qu'un déplacement de l'élément de sécurisation (14) de la position de libération (P1) vers la position de verrouillage (P2) est empêché, comporte au moins une saillie qui est agencée pour s'engager avec le bras de retenue élastique (24) de telle sorte qu'un déplacement du bras de retenue élastique (24) vers l'intérieur dans le sens radial soit essentiellement empêché et/ou qu'un déplacement de la partie (34) de l'élément de sécurisation (14) vers l'extérieur dans le sens radial soit essentiellement empêché.

5. L'accouplement fluidique (10) selon la revendication 3 ou 4,
**caractérisé en ce que** la partie (34) de l'élément de sécurisation (14), qui est en prise avec le bras de retenue élastique (24) de telle sorte qu'un déplacement de l'élément de sécurisation (14) de la position de libération (P1) vers la position de verrouillage (P2) est empêché, traverse vers l'extérieur, dans la position de verrouillage (P2) de l'élément de sécurisation (14), une ouverture de l'élément de réception (12), notamment dans lequel l'ouverture sur l'élément de réception (12) est disposée sur un côté diamétralement opposé à l'élément à ressort (40).

6. L'accouplement fluidique (10) selon l'une des revendications 3 à 5,
**caractérisé en ce que** le bras de retenue (24) se rétrécit vers son extrémité libre et/ou **en ce qu'**un côté radialement extérieur du bras de retenue, par rapport à un axe longitudinal central (X) de l'élément de réception (12), présente un épaulement (60) au niveau duquel le côté extérieur, vu dans une direction vers son extrémité libre, s'enfonce radialement vers l'intérieur.

7. L'accouplement fluidique (10) selon l'une des revendications précédentes,
**caractérisé en ce que** l'élément à ressort (40) est un ressort hélicoïdal, en particulier un ressort de compression, qui est formé en métal, en particulier en acier à ressort.

8. L'accouplement fluidique (10) selon l'une des revendications précédentes,
**caractérisé en ce que** l'élément d'appui (42) est agencé pour être enclenché avec l'élément de réception (12) de telle sorte qu'il soit relié de manière indémontable et sans destruction à l'élément de réception (12).

9. L'accouplement fluidique (10) selon l'une des revendications précédentes,
**caractérisé en ce que** l'élément de réception (12) présente au moins une ouverture traversante (62) qui s'étend depuis une face extérieure vers l'intérieur dans le sens radial et sensiblement orthogonalement tant à la direction d'insertion (X) de l'élément d'insertion (18) dans l'élément de réception (12) qu'à la direction de déplacement (Y) de l'élément de sécurisation (14).

10. L'accouplement fluidique (10) selon l'une des revendications précédentes,
**caractérisé en ce que**, dans un état dans lequel l'élément de sécurisation (14) est disposé sur l'élément de réception (12), en particulier dans la position de verrouillage (P2), un espace libre (56) est prévu entre une partie de l'élément de retenue (14) et l'élément d'appui (42), lequel espace est adapté à l'introduction d'un outil (54) destiné à déplacer l'élément de sécurisation (14) de la position de verrouillage (P2) vers la position de libération (P1).

11. L'accouplement fluidique (10) selon l'une des revendications précédentes,
**caractérisé en ce qu'**une partie de sécurisation (36) de l'élément de sécurisation (14), qui, dans la position de verrouillage (P2) de l'élément de sécurisation (14) est en prise avec un contre-élément (38) de l'élément d'insertion (18), présente, considérée le long de la direction d'insertion (X) de l'élément d'insertion (18) dans l'élément de réception (12), une extension longitudinale supérieure à celle du contre-élément (38).

12. L'accouplement fluidique (10) selon l'une des revendications précédentes,
**caractérisé en ce que** l'élément de retenue (16) est conçu comme un composant distinct de l'élément de réception (12) et est agencé pour s'enclencher avec l'élément de réception (12), notamment à l'aide d'au moins deux, de préférence trois, paires d'enclenchement (70, 72).

13. L'accouplement fluidique (10) selon l'une des revendications précédentes,
**caractérisé en ce que** l'élément de retenue (16) comporte au moins deux saillies (64, 66) qui sont agencées pour s'engager dans au moins deux évidements correspondants (28, 68) de l'élément de réception (12), afin d'assurer un guidage de l'élément de retenue (16) lors de son insertion dans l'élément de réception (12).

14. L'accouplement fluidique (10) selon la revendication précédente,
**caractérisé en ce que** les évidements (28, 68) de l'élément de réception (12) s'étendent dans l'élément de réception (12) de manière sensiblement parallèle à la direction d'insertion (X) de l'élément d'insertion (18) dans l'élément de réception (12).
